# FASCICULE DE BREVET EUROPEEN

(11) **EP 4 105 498 B1**
(45) Date de publication et mention de la délivrance du brevet: **03.04.2024**
(21) Numéro de dépôt: 22020262.6
(22) Date de dépôt: 03.06.2022
(51) Int. Cl.: F16B 12/12, A47C 7/00, F16B 12/20, F16B 12/46, A47C 4/02, A47C 9/00, A47B 13/04, A47B 47/05

(54) **KIT ET PROCÉDÉ POUR LE MONTAGE D'UN ÉLÉMENT DE MOBILIER ET ÉLÉMENT DE MOBILIER**
KIT UND VERFAHREN ZUR MONTAGE EINES ELEMENTS EINES MÖBELSTÜCKS UND ELEMENT EINES MÖBELSTÜCKS
KIT AND METHOD FOR ASSEMBLING A FURNITURE UNIT AND FURNITURE UNIT

(30) Priorité: 15.06.2021 FR 2106346
(43) Date de publication de la demande: 21.12.2022
(73) Titulaire: Lopez-Rios, Tomas, 38700 La Tronche (FR)
(72) Inventeur: Lopez-Rios, Tomas, 38700 La Tronche (FR)
(74) Mandataire: Stona, Daniel

(56) Documents cités:
- EP-A1- 2 023 455
- GB-A- 2 031 051
- US-A- 3 353 888
- US-A- 5 470 139

## Description

L'invention concerne un kit pour le montage d'un élément de mobilier, comme un tabouret ou une chaise.

L'invention a également trait à procédé pour le montage d'un élément de mobilier ainsi qu'à un élément de mobilier monté à l'aide d'au moins un kit selon l'invention.

### Arrière-plan de l'invention

De nos jours, les meubles composables et modulaires sont très appréciés car ils permettent une grande liberté de dimensions et de formes, ce qui les rend facilement intégrables dans un logement.

En outre, ils donnent à l'utilisateur la possibilité d'intervenir dans la réalisation d'un meuble et le plaisir de créer lui-même un objet suivant ses goûts.

De nombreux systèmes existent pour fabriquer de façon industrielle ce type de meubles.

On peut citer par exemple, celui décrit dans la demande de brevet français publiée sous le numéro FR 2 569 543 et qui utilise des tasseaux ou longerons pourvus de mortaises dans lesquelles s'introduisent des tenons situés à l'extrémité de planchettes. Un autre exemple de kit pour le montage d'un élément de mobilier est décrit dans US 3 353 888 A.

### Exposé sommaire de l'invention

Le but de l'invention est d'offrir à un utilisateur plus de possibilités de création, de manière à ce qu'il puisse obtenir davantage de formes, et ceci de façon simple et rapide et en utilisant, d'une part, un nombre restreint d'éléments d'assemblage et, d'autre part, peu d'outils pour le montage d'un élément de mobilier.

Selon l'invention, ce but est atteint par un kit selon la revendication 1.

Des caractéristiques avantageuses du kit sont décrites dans les revendications dépendantes 2 à 11.

Selon un autre aspect, l'invention se rapporte à un procédé de montage d'un élément de mobilier selon la revendication 12.

Selon encore un autre aspect, l'invention a pour objet un élément de mobilier monté à l'aide d'au moins un exemplaire du kit précité, notamment, en mettant en œuvre le procédé de montage qui vient d'être présenté.

Un tel élément de mobilier offre en particulier l'avantage de pouvoir être monté et démonté un nombre illimité de fois, de pouvoir être aisément complété ou allégé en retirant certaines de ses pièces constitutives.

D'autres caractéristiques et avantages de l'invention vont maintenant être décrits en détail dans l'exposé suivant qui est donné en référence aux figures annexées, lesquelles représentent schématiquement :
[Fig. 1] : une pièce allongée d'un kit selon l'invention, en vue face en perspective ;
[Fig. 2] : une section transversale de la pièce de la figure 1 ;
[Fig. 3] : une autre pièce allongée d'un kit selon l'invention, en vue de face en perspective ;
[Fig. 4] : un kit selon l'invention sur le point d'être assemblé, en vue de face en perspective ;
[Fig. 5] : le kit de la figure 4, à l'état assemblé avec les éléments de fixation de la figure 5, en vue de face en coupe ;
[Fig. 6] : une double équerre d'un mode de réalisation préféré du kit selon l'invention, en vue de face en perspective ;
[Fig. 7] : la double équerre de la figure 7, en cours de mise en place sur des pièces allongées d'un kit selon l'invention, en vue de face en perspective ;
[Fig. 8] : un tabouret selon l'invention, en vue de face en perspective ;
[Fig. 9], [Fig. 10], [Fig. 11] et [Fig. 12] : des variantes de pièce allongée d'un kit selon l'invention, en section transversale ; et
[Fig. 13] et [Fig. 14] : des assemblages selon l'invention.

### Exposé détaillé de l'invention

L'invention rend possible le montage de meubles composables, modulaires, évolutifs, composés de matériaux solides suffisamment rigides tels que des bois massifs, des bois contreplaqués, certaines matières plastiques, des métaux, etc.

Pour cela, le kit selon l'invention doit d'abord comprendre des pièces allongées. Il s'agit généralement de pièces à base polygonale se développant régulièrement le long d'un axe longitudinal.

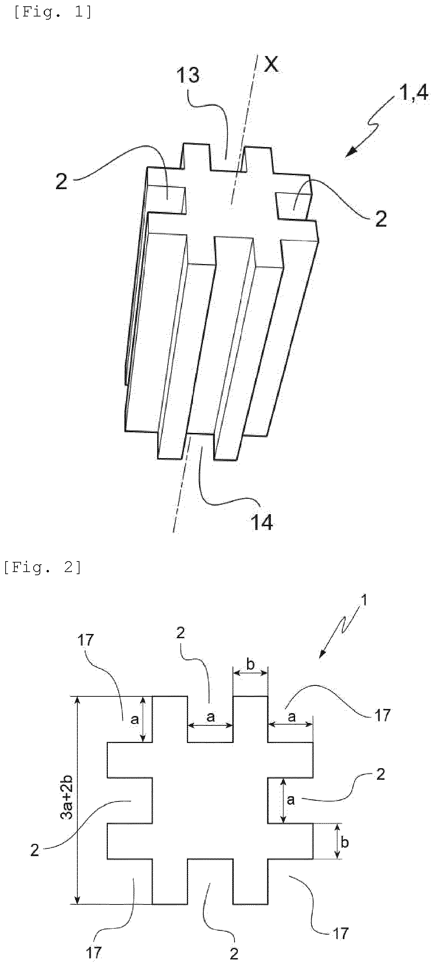

Une telle pièce allongée 1 est représentée sur les figures 1 à 3.

Elle présente un axe longitudinal X et, comme on peut le voir en particulier sur la figure 2, sa section transversale, qui est sensiblement constante sur toute sa longueur axiale, correspond à un carré dont le côté a une longueur égale (3**a**+2**b**) auquel on a retiré 8 carrés de côté **a,** au niveau des angles et au milieu des côtés. On obtient ainsi 4 rainures longitudinales 2 identiques de profondeur **a.**

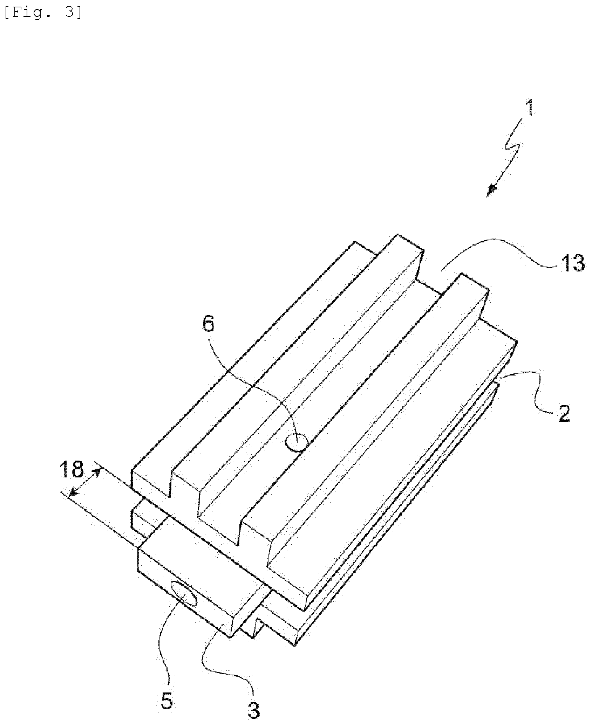

Sur la figure 3, on aperçoit un tenon 3 de forme préférentiellement parallélépipédique faisant saillie parallèlement à l'axe longitudinal X depuis une extrémité longitudinale de la pièce allongée 1.

Ce tenon 3 a une base de préférence rectangulaire, avec une largeur de valeur **a,** une épaisseur de préférence de valeur **a** et une longueur de valeur **c**, avec **C** > **a,** de préférence **C** > 2**a**, et plus préférentiellement encore **c** = 3**a**, une variable **b** étant définie comme **b = (c-a)/2.**

Les valeurs **a** et de **b** sont de préférences égales afin de simplifier la fabrication des pièces allongées.

Le tenon 3 est apte à s'insérer dans une rainure longitudinale 2 d'une deuxième pièce allongée 4 identique ou similaire à la pièce allongée 1.

Comme on peut le voir sur la figure 3, la pièce allongée 1 comporte un premier trou longitudinal 5 dans le tenon 3, de préférence au milieu, ainsi qu'un deuxième trou transversal 6, réalisé de préférence dans la rainure transversale 2, et qui débouche dans le premier trou longitudinal 5.

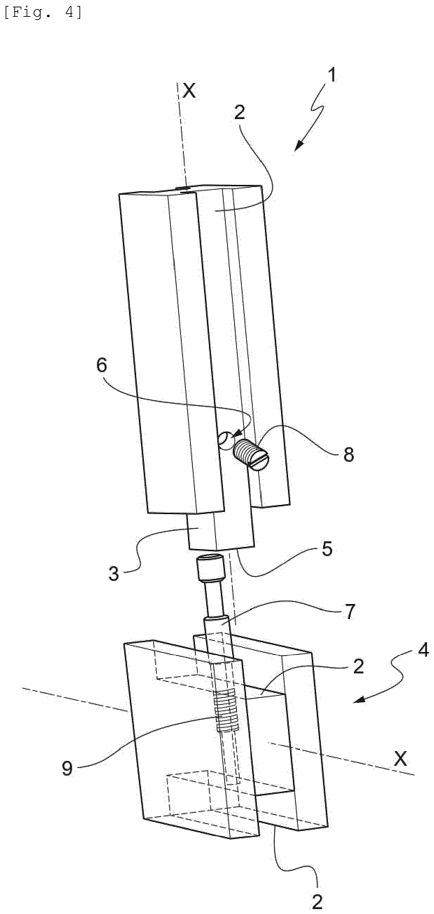

Comme on peut le voir sur la figure 4, la deuxième pièce allongée 4 comporte un troisième trou 9, transversal, dans sa rainure longitudinale 2, c'est-à-dire perpendiculaire à l'axe son axe longitudinal X.

Ainsi, un premier élément de fixation 7 peut pénétrer partiellement dans le premier trou 5 de la première pièce allongée 1 et partiellement dans le troisième trou 9 de la deuxième pièce allongée 4.

Un deuxième élément de fixation 8 peut pénétrer partiellement dans le deuxième trou 6.

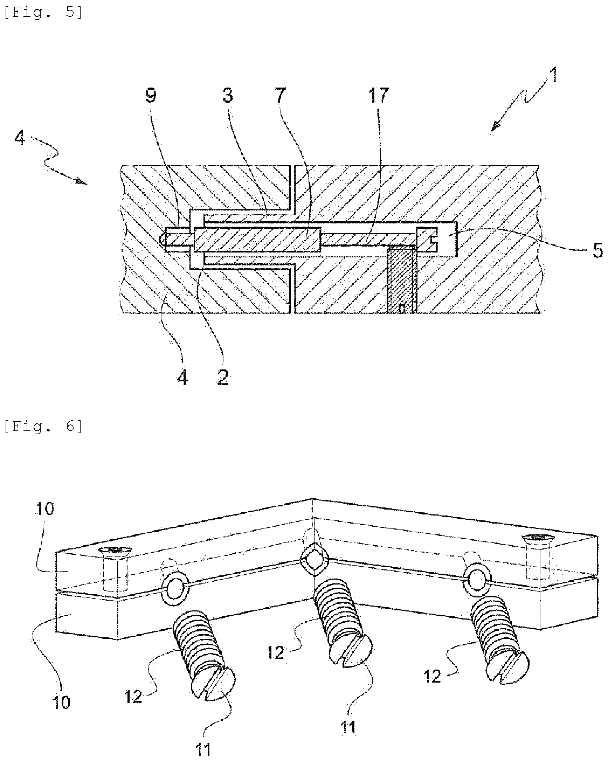

Sur la figure 5 sont représentés en détail des exemples de premier 7 et deuxième 8 éléments de fixation et, sur la figure 6, leur coopération en vue du maintien des première et deuxième pièces allongées 1,4 ensemble.

Le premier élément de fixation 7 peut être un tourillon dont une extrémité est filetée et visée dans le troisième trou transversal taraudé 9 prévu au fond de la rainure 2 du deuxième élément allongé 4. L'autre extrémité du premier élément de fixation 7 est à l'intérieur du premier trou longitudinal 5 de la première pièce allongée 1.

Le deuxième élément de fixation 8 peut être une vis à pointe conique vissée dans le deuxième trou transversal taraudé 6 de la première pièce allongée 1 jusqu'à ce que sa pointe conique exerce une force sur le premier élément de fixation 7 visant à rapprocher les deux pièces allongées 1 et 4 et à les immobiliser, grâce un tronçon longitudinal 17 de diamètre réduit de l'élément de fixation 7.

Ainsi, une fois les pièces allongées 1 et 4 assemblées, leurs rainures respectives 2 sont perpendiculaires.

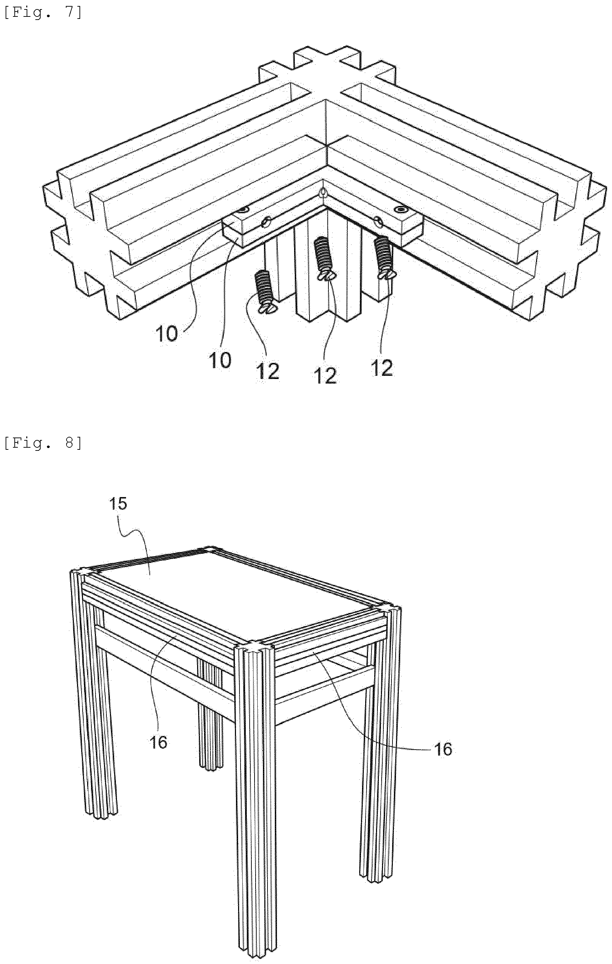

Selon l'invention, des moyens sont prévus pour renforcer l'assemblage des première et deuxième pièces allongées 1,4. Ces moyens de renforcement sont constitués de deux équerres 10 visibles sur la figure 6, qui sont de préférence identiques et dont la somme des épaisseurs est légèrement inférieure à la largeur des rainures 2, ce qui permet aux équerres de s'insérer dans ces rainures et dans un angle formé par celles-ci, comme on peut le voir sur la figure 7. En outre, des trous circulaires et taraudés sont prévus avec une moitié cylindrique axiale dans une équerre et l'autre moitié cylindrique axiale dans l'autre équerre. Ces trous sont de préférence inclinés de 45 ou 135 degrés par rapport à l'axe longitudinal des bras des équerres dans lesquels ils se trouvent. De plus, leurs entrées sont chanfreinées pour recevoir les têtes coniques fendues 11 de vis 12 à tête conique fendue. Ainsi, comme on peut le déduire de la figure 7, en vissant profondément les vis 12 dans les trous, la conicité des têtes 11 exerce un effort d'écartement sur les deux équerres 10 se trouvant dans les deux rainures agencées perpendiculairement.

Avantageusement, les faces des équerres 10 destinées à être tournées vers les parois des rainures longitudinales 2 sont munies de mini-picots pour augmenter la friction entre les équerres et ces parois.

Lorsque les équerres sont faites de certains matériaux, tel que des matières plastiques, les vis 12 peuvent être auto-perforantes. Avec d'autres matériaux, il est nécessaire que les trous des équerres soient filetés.

Les pièces allongées 1 et 4 ont pour vocation de servir à l'assemblage d'autres pièces telles que des longerons ou des lattes 15 visibles sur la figure 8. Les pièces allongées 1 et 4 sont alors de préférences pourvues de rainures longitudinales supplémentaires 13,14, visibles notamment sur la figure 1, pour loger l'extrémité de ces lattes 15. L'épaisseur des lattes 15 est donc sensiblement égale à la largeur des rainures longitudinales 13,14 destinées à les loger.

Avantageusement, les rainures longitudinales 2 et les rainures longitudinales supplémentaires 13,14 ont les mêmes dimensions de façon à pouvoir être utilisées indifféremment avec un tenon ou une latte.

Comme on peut le voir également sur la figure 8, le kit selon l'invention peut également être muni d'éléments de remplissage parallélépipédiques ou barrettes 16 dont la section transversale a la même surface que la section transversale d'une rainure longitudinale 2 ou d'une rainure longitudinale supplémentaire 13,14.

Ces éléments de remplissage parallélépipédiques 16 ont au moins deux fonctions : une fonction esthétique, car ils peuvent apporter une teinte ou nuance différente, et une fonction technique puisqu'en remplissant une rainure, ils empêchent que les arêtes de celle-ci blessent un utilisateur, accrochent un vêtement, hébergent des saletés, etc.

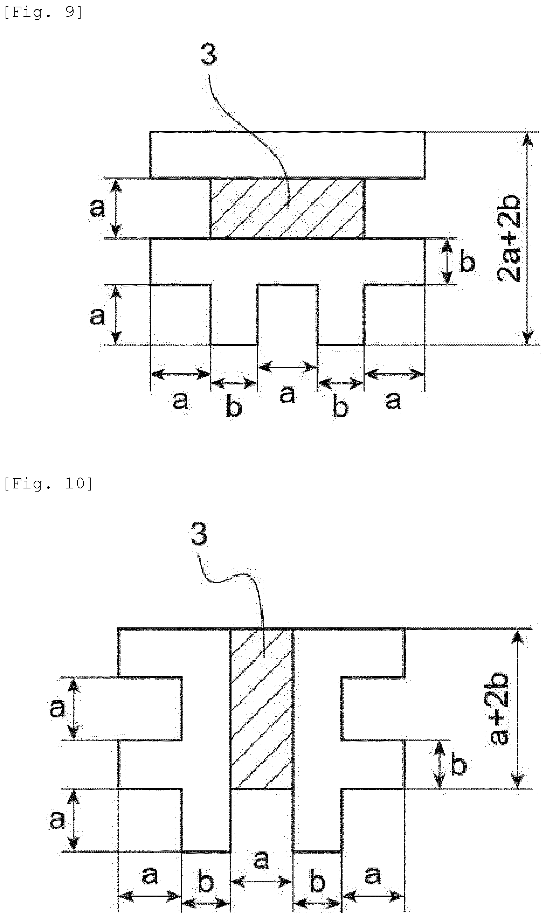

Sur les figures 9, 10, 11 et 12 sont représentées des variantes de pièce allongée en section transversale. La coupe a été réalisée au niveau du tenon 3 pour faire ressortir celui-ci en hachures.

Comme on peut le voir, les tenons ont toujours une largeur **a,** une longueur supérieure à **a,** de préférence supérieure à 2**a** et plus préférentiellement égale à **(a** + 2**b)** ainsi que préférablement une épaisseur de valeur **a.**

Leur largeur **a** leur permet de s'insérer entre les parois parallèles d'une rainure longitudinale, leur épaisseur de pénétrer de préférence jusqu'au fond de la rainure, tandis que leur longueur (**a** + 2**b**) a moins d'importance car elle est bien inférieure à la longueur d'une rainure longitudinale. Chaque section transversale est sensiblement constante sur toute la longueur axiale de la pièce allongée correspondante.

La section transversale de la pièce allongée de la figure 9 correspond à un rectangle de longueur (3**a** + 2**b**) et de largeur (2**a** + 2**b)** auquel on a retiré 5 carrés de côté **a,** deux au niveau de deux angles d'une même longueur (au sens de côté longitudinal), un au milieu de cette même longueur, puis deux au milieu des deux largeurs (au sens de côté transversal) restantes.

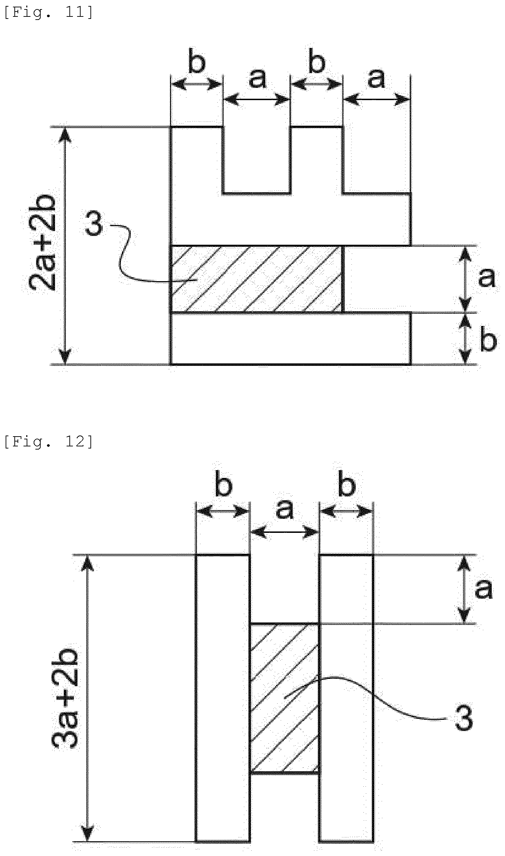

La section transversale de la pièce allongée de la figure 10 est identique à celle de la pièce allongée de la figure 9, mais le tenon 3 est perpendiculaire à celui de la figure 9. La section transversale de la pièce allongée de la figure 11 correspond à un carré de côté (2**a** + 2**b)** auquel on a retiré 3 carrés de côté **a,** deux au milieu de deux côtés adjacents, puis un à l'angle formé par ces deux côtés.

La section transversale de la pièce allongée de la figure 12 correspond à un rectangle de longueur (3**a** + 2**b)** et de largeur (**a** + 2**b)** auquel on a retiré 2 carrés de côté **a,** au milieu des deux largeurs (côtés transversaux).

Bien entendu, certaines pièces allongées n'ont pas de tenon (leurs extrémités longitudinales sont donc planes), d'autres en ont un et d'autres encore en ont un à chaque extrémité longitudinale.

Les pièces allongées ont des longueurs qui dépendent des dimensions des meubles que l'on entend fabriquer.

Le deuxième élément de fixation 8 peut être une vis sans tête. Il peut aussi être, pour certains matériaux comme le bois, auto-taraudant lors du vissage dans le trou 6. Pour d'autres matériaux, il est nécessaire que le trou 6 soit taraudé. En variante, il est possible d'introduire dans le trou 6 un insert à creux central taraudé.

D'autres systèmes d'assemblage peuvent être employés, par exemple avec une pièce excentrique à la place de la vis, comme décrit notamment dans le brevet étasunien délivré sous le numéro US 4 518 278. Dans ce cas, bien évidemment, le diamètre du deuxième trou transversal 6 doit être plus grand qu'avec une vis.

### Procédé selon l'invention

Le montage d'un élément de mobilier peut s'effectuer suivant un procédé comprenant les étapes consistant à :
- se procurer un kit selon l'invention ;
- introduire partiellement et fixer le premier élément de fixation 7 dans le troisième trou transversal 9 de la deuxième pièce allongée 4 ;
- insérer l'extrémité libre du premier élément de fixation 7 dans le premier trou longitudinal 5 du tenon 3 de la première pièce allongée 1 ;
- introduire le deuxième élément de fixation 8 dans le deuxième trou transversal 6 de la première pièce allongée 1 ;
- faire coopérer les premier et deuxième éléments de fixation 7,8 afin qu'ils maintiennent ensemble les première et deuxième pièces allongées 1,4.

Le procédé comprend en outre un renforcement de l'assemblage des première et deuxième pièces allongées, renforcement qui comprend les étapes suivantes :
- insertion des deux équerres 10 de manière superposée l'une à l'autre dans les deux rainures longitudinales perpendiculaires 2;
- actionnement du moyen d'écartement afin d'écarter l'une de l'autre les équerres 10 et de renforcer ainsi l'assemblage des première et deuxième pièces allongées 1,4.

De plus, il est avantageux de prévoir l'étape consistant à introduire partiellement une latte 15 dans une rainure longitudinale supplémentaire 13,14.

Qui plus est, il est possible d'ajouter l'étape d'introduction totale d'un élément de remplissage parallélépipédique 16 dans l'une des rainures 2,13,14.

Il est préférable de prévoir plusieurs types de lattes, en particulier trois, de largeurs différentes mais de même longueur, les lattes les moins larges étant prévues pour être disposées aux extrémités des panneaux que l'on souhaite fabriquer. En faisant varier les nombres de lattes de chaque type, on peut facilement obtenir la largeur désirée.

La fabrication des lattes les moins larges peut s'effectuer tout simplement par coupe longitudinale des lattes les plus larges.

Il faut cependant veiller à ce que la surface de l'extrémité de la pièce allongée, depuis laquelle chaque tenon fait saillie, soit bien perpendiculaire de tous côtés à l'axe longitudinal X de la pièce allongée. En effet, lorsque le tenon est inséré dans une rainure longitudinale c'est cette base qui est en contact avec les bords de la rainure longitudinale. Il est donc impératif que la base soit bien perpendiculaire à l'axe longitudinal X pour que les pièces allongées soient bien perpendiculaires l'une à l'autre suivant tous les angles.

Un nombre incalculable de meubles de formes et de dimensions différentes peuvent être crées par assemblages de pièces allongées selon l'invention ayant des sections transversales telles que celles représentées sur les figures 2, 10, 11 et 12 et de lattes de largeurs variées.

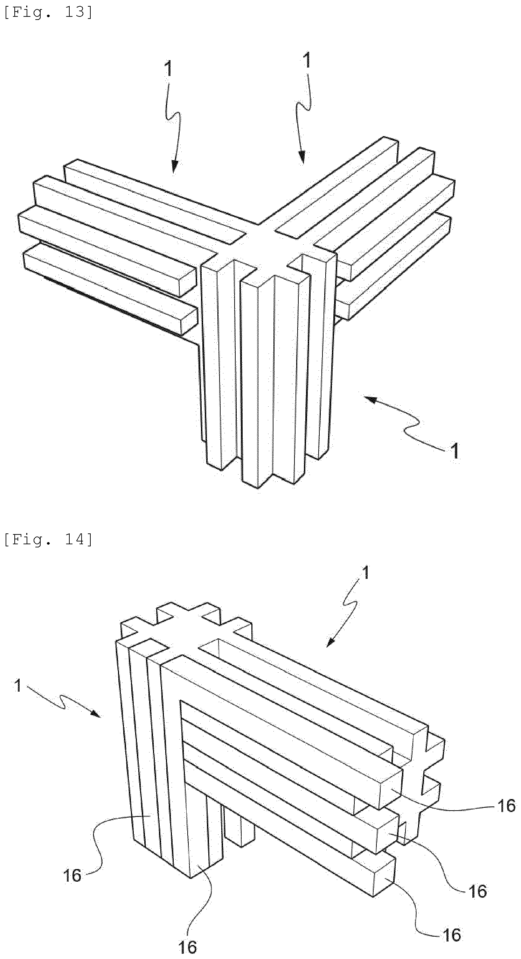

A titre d'exemples, sur la figure 13 est représenté un assemblage composé d'une pièce verticale 1 suivant la figure 1 et de deux pièces horizontales 1 suivant la figure 3. L'assemblage de la figure 14 est composé d'une pièce verticale 1 conforme à la figure 1 et d'une pièce verticale 1 conforme à la figure 3. Des baguettes 16 ont été insérées verticalement et horizontalement dans certaines rainures de ces pièces.

Le tabouret de la figure 8 a été réalisé avec des pièces allongées dont la longueur du côté **a** était de 11 mm et celle du côté **b** de 8 mm. Quatre pièces allongées de la figure 2, quatre de la figure 11 et quatre de la figure 12 ont été utilisées, ainsi que des lattes 15 et des barrettes 16.

De façon générale, les barrettes 16 reçues dans les rainures longitudinales 2,13,14 peuvent être fixées par collage, par ajustement serré ou par tout autre moyen approprié. L'invention permet donc de personnaliser des meubles et elle est particulièrement adaptée à la fabrication de meubles en bois massif à partir de profilés que l'on peut fabriquer facilement en série, puis couper à la bonne longueur avant d'usiner les rainures longitudinales ainsi que, le cas échéant, les dégagements longitudinaux 17 en forme de **L** ou de cornière (cf. Fig. 2) dans les angles.

Puisque les opérations sont similaires pour toutes les pièces, le processus de fabrication peut être très rapide. Des meubles en bois, avec **a = b** = 10 mm, un premier trou longitudinal de 8 mm, un deuxième et un troisième trous transversaux de 5 mm, des tourillons du commerce à filetage de 6,2 mm et des vis sans tête du type 6,2 mm, très robustes et fonctionnels, peuvent être aisément construits.

En outre, les objets formés peuvent être montés et démontés un nombre illimité de fois, complétés et certaines parties peuvent être enlevées aisément.

## Revendications

1. Kit pour le montage d'un élément de mobilier comprenant :
- au moins une première pièce allongée (1) et une deuxième pièce allongée (4) présentant chacune un axe longitudinal (X) et au moins une rainure longitudinale (2) parallèle à cet axe longitudinal (X) ; les deux rainures longitudinales (2) ayant la même section transversale ; la première pièce allongée (1) présentant à une extrémité longitudinale un tenon (3) apte à s'insérer dans la rainure longitudinale (2) de la deuxième pièce allongée (4) ; un premier trou (5), longitudinal, étant prévu dans le tenon (3) et un deuxième trou (6), transversal, étant prévu dans la première pièce allongée (1) et débouchant dans le premier trou longitudinal (5) ; un troisième trou (9), transversal, étant prévu dans la rainure longitudinale (2) de la deuxième pièce allongée (4) ;
- un premier élément de fixation (7) apte à pénétrer partiellement dans le premier trou (5) et partiellement dans le troisième trou (9) ; et
- un deuxième élément de fixation (8) apte à pénétrer au moins partiellement dans le deuxième trou (6) ; les premier et deuxième éléments de fixation (7,8) étant aptes à coopérer l'un avec l'autre pour maintenir ensemble les première et deuxième pièces allongées (1,4) ;
**caractérisée en ce qu'**il comprend en outre des moyens de renforcement (10,11) de l'assemblage des première et deuxième pièces allongées (1,4),
ces moyens de renforcement comprenant deux équerres (10), aptes à s'insérer au moins partiellement dans lesdites deux rainures longitudinales (2) en étant superposées l'une à l'autre, ainsi qu'un moyen d'écartement (11) des deux équerres (10) l'une de l'autre, lorsqu'elles sont insérées de manière superposée l'une à l'autre dans lesdites deux rainures longitudinales (2).

2. Kit selon la revendication 1, dans lequel chaque rainure longitudinale (2) s'étend sur toute la longueur de la pièce allongée respective (1,4).

3. - Kit selon la revendication 1 ou la revendication 2, dans lequel les faces des équerres (10) destinées à être tournées vers les parois des rainures longitudinales sont munies de mini-picots pour augmenter la friction entre les équerres (10) et ces parois.

4. Kit selon l'une des revendications 1 à 3, dans lequel l'une au moins des première et deuxième pièces allongées (1,4) présente au moins une rainure longitudinale supplémentaire (13,14) et le kit comprend en outre au moins une latte (15) dont l'épaisseur est sensiblement égale à celle de la largeur de la rainure longitudinale supplémentaire (13,14).

5. - Kit selon la revendication 4, dans lequel la ou les rainure(s) longitudinale(s) et la ou les rainure(s) longitudinale(s) supplémentaire(s) ont les mêmes dimensions.

6. Kit selon l'une des revendications 1 à 5, comprenant en outre au moins un élément de remplissage parallélépipédique (16) dont la section transversale a la même surface que la section transversale d'au moins l'une des rainures longitudinales (2) ou, le cas échéant, dans l'une des rainures longitudinales supplémentaire (13,14).

7. Kit selon l'une des revendications 1 à 6, dans lequel l'épaisseur (18) et la largeur du tenon (3) de la première pièce allongée (1) sont égales.

8. Kit selon l'une des revendications 1 à 7, dans lequel le tenon (3) de la première pièce allongée (1) a une largeur de valeur **a** et une longueur de valeur **C,** avec **C** > **a,** une variable **b** étant définie comme **b = (c-a)/2,** et dans lequel les pièces allongées (1,4) ont une section transversale choisie parmi les suivantes :
- une section transversale correspondant à un grand carré dont le côté a une longueur égale à (3**a**+2**b**) et auquel on a retiré huit petits carrés de côté (**a**), quatre au niveau des angles et quatre au milieu des côtés du carré ;
- une section transversale correspondant à un rectangle de longueur (3**a** + 2**b**) et de largeur (2**a** + 2**b**) auquel on a retiré cinq carrés de côté (**a**), deux au niveau des deux angles d'une même longueur, un au milieu de la même longueur, puis deux au milieu des deux largeurs restantes ;
- une section transversale correspondant à un grand carré de côté (2**a** + 2**b**) auquel on a retiré trois petits carrés de côté (**a**), deux au milieu de deux côtés adjacents, puis à l'angle formé par ces deux côtés ; et
- une section transversale correspondant à un rectangle de longueur (3**a** + 2**b**) auquel on a retiré deux carrés de côté (**a**), au milieu des deux largeurs.

9. - Kit selon la revendication 8, dans lequel **C** > 2**a** et de préférence **c =** 3**a.**

10. - Kit selon l'une des revendications 1 à 9, dans lequel la surface de l'extrémité de la première pièce allongée (1), depuis laquelle chaque tenon (3) fait saillie, est perpendiculaire de tous côtés à l'axe longitudinal de cette première pièce allongée (1).

11. - Kit selon l'une des revendications 1 à 10, dans lequel la section transversale de chaque pièce allongée (1,4) est sensiblement constante sur toute la longueur axiale de cette pièce (1,4).

12. Procédé de montage d'un élément de mobilier comprenant les étapes consistant à :
- se procurer un kit selon l'une des revendications 1 à 11 ;
- introduire partiellement et fixer le premier élément de fixation (7) dans le troisième trou transversal (9) de la deuxième pièce allongée (4) ;
- insérer l'extrémité libre du premier élément de fixation (7) dans le premier trou longitudinal (5) du tenon (3) de la première pièce allongée (1) ;
- introduire le deuxième élément de fixation (8) dans le deuxième trou transversal (6) de la première pièce allongée (1) ;
- faire coopérer les premier et deuxième éléments de fixation (7,8) afin qu'ils maintiennent ensemble les première et deuxième pièces allongées (1,4) ;
- renforcer l'assemblage des première et deuxième pièces allongées (1,4) par :
• insertion des deux équerres (10) de manière superposée l'une à l'autre dans les deux rainures longitudinales perpendiculaires (2);
• actionnement du moyen d'écartement (11) afin d'écarter l'une de l'autre les première et deuxième équerres (10) et de renforcer ainsi l'assemblage des première et deuxième pièces allongées (1,4).

13. Procédé selon la revendication 12, dans lequel on utilise un kit selon une revendication dépendante de la revendication 3 au moins, comprenant en outre l'étape consistant à introduire partiellement la latte (15) dans une rainure longitudinale supplémentaire (13,14).

14. Procédé selon l'une des revendications 12 et 13, dans lequel on utilise un kit selon une revendication dépendante de la revendication 4 au moins, comprenant en outre l'étape consistant à introduire totalement l'élément de remplissage parallélépipédique (16) dans l'une des rainures longitudinales (2) ou, le cas échéant, dans l'une des rainures longitudinales supplémentaires (13,14).

15. Elément de mobilier monté à l'aide d'au moins un kit selon l'une des revendications 1 à 11.

## Patentansprüche

1. Kit zur Montage eines Elements eines Möbelstücks mit :
- mindestens einem ersten längliches Teil (1) und einem zweiten länglichen Teil (4), die jeweils eine Längsachse (X) und mindestens eine Längsnut (2) parallel zu dieser Längsachse (X) aufweisen; wobei die beiden Längsnuten (2) denselben Querschnitt haben, wobei das erste längliche Teil (1) an einem Längsende einen Zapfen (3) aufweist, der geeignet ist, in die Längsnut (2) des zweiten länglichen Teils (4) eingeführt zu werden; wobei ein erstes, längs verlaufendes Loch (5) in dem Zapfen (3) und ein zweites, quer verlaufendes Loch (6) in dem ersten länglichen Teil (1) vorgesehen ist und in das erste längs verlaufende Loch (5) mündet; wobei ein drittes, quer verlaufendes Loch (9) in der Längsnut (2) des zweiten länglichen Teils (4) vorgesehen ist;
- einem ersten Befestigungselement (7), das dazu geeignet ist, teilweise in das erste Loch (5) und teilweise in das dritte Loch (9) einzudringen; und
- einem zweiten Befestigungselement (8), das dazu geeignet ist, zumindest teilweise in das zweite Loch (6) einzudringen; wobei das erste und das zweite Befestigungselement (7, 8) geeignet sind, miteinander zusammenzuwirken, um das erste und das zweite längliche Teil (1, 4) zusammenzuhalten;
**dadurch gekennzeichnet, dass** es außerdem Mittel (10, 11) zur Verstärkung der Verbindung des ersten und zweiten länglichen Teils (1, 4) umfasst,
wobei diese Verstärkungsmittel zwei Winkel (10) umfassen, die geeignet sind, sich zumindest teilweise in die beiden Längsnuten (2) einzufügen, indem sie übereinander liegend angeordnet sind, sowie ein Mittel (11) zum Beabstanden der beiden Winkel (10) voneinander, bis sie auf übereinander liegende Weise angeordnet in die beiden Längsnuten (2) eingefügt sind.

2. Kit nach Anspruch 1, wobei sich jede Längsnut (2) über die gesamte Länge des jeweiligen länglichen Teils (1, 4) erstreckt.

3. - Kit nach Anspruch 1 oder Anspruch 2, wobei die Seiten der Winkel (10), die dazu bestimmt sind, den Wänden der Längsnuten zugewandt zu sein, mit Mininoppen versehen sind, um die Reibung zwischen den Winkeln (10) und diesen Wänden zu erhöhen.

4. Kit nach einem der Ansprüche 1 bis 3, wobei mindestens eines der ersten und zweiten länglichen Teile (1, 4) mindestens eine zusätzliche Längsnut (13, 14) aufweist und der Kit außerdem mindestens eine Latte (15) umfasst, deren Dicke im Wesentlichen gleich der Breite der zusätzlichen Längsnut (13, 14) ist.

5. Kit nach Anspruch 4, wobei die Längsnut(en) und die zusätzliche(n) Längsnut(en) die gleichen Abmessungen haben.

6. Kit nach einem der Ansprüche 1 bis 5, ferner umfassend mindestens ein quaderförmiges Füllelement (16), dessen Querschnitt die gleiche Fläche hat wie der Querschnitt mindestens einer der Längsnuten (2) oder gegebenenfalls einer der zusätzlichen Längsnuten (13, 14).

7. Kit nach einem der Ansprüche 1 bis 6, wobei die Dicke (18) und die Breite des Zapfens (3) des ersten länglichen Teils (1) gleich sind.

8. Kit nach einem der Ansprüche 1 bis 7, wobei der Zapfen (3) des ersten länglichen Teils (1) eine Breite mit dem Wert a und eine Länge mit dem Wert c hat, wobei c > a ist, wobei eine Variable b als b = (c-a)/2 definiert ist, und wobei die länglichen Teile (1, 4) einen Querschnitt haben, der aus den folgenden ausgewählt ist:
- einen Querschnitt, der einem großen Quadrat entspricht, dessen Seite einer Länge von (3a+2b) hat und von dem acht kleine Quadrate mit der Seite (a) entfernt wurden, vier im Bereich der Ecken und vier in der Mitte der Seiten des Quadrats;
- einen Querschnitt, der einem Rechteck mit der Länge (3a + 2b) und der Breite (2a + 2b) entspricht, von dem fünf Quadrate mit der Seite (a) entfernt wurden, zwei im Bereich der zwei Ecken einer gleichen Länge, eines in der Mitte der gleichen Länge und dann zwei in der Mitte der beiden verbleibenden Breiten;
- einen Querschnitt, der einem großen Quadrat mit der Seite (2a + 2b) entspricht, von dem drei kleine Quadrate mit der Seite (a) entfernt wurden, zwei in der Mitte von zwei benachbarten Seiten und dann in dem Winkel, der von diesen beiden Seiten gebildet wird, und
- einen Querschnitt, der einem Rechteck mit der Länge (3a + 2b) entspricht, dem zwei Quadrate mit der Seitenlänge (a) in der Mitte der beiden Breiten entnommen wurden.

9. Kit nach Anspruch 8, wobei c > 2a und vorzugsweise c = 3a ist.

10. Kit nach einem der Ansprüche 1 bis 9, wobei die Oberfläche des Endes des ersten länglichen Teils (1), von dem jeder Zapfen (3) vorsteht, auf allen Seiten rechtwinklig zur Längsachse dieses ersten länglichen Teils (1) ist.

11. Kit nach einem der Ansprüche 1 bis 10, wobei der Querschnitt jedes länglichen Teils (1,4) über die gesamte axiale Länge dieses Teils (1,4) im Wesentlichen konstant ist.

12. Verfahren zur Montage eines Möbelstücks, das die Schritte umfasst bestehend aus:
- Beschaffen eines Sets nach einem der Ansprüche 1 bis 11;
- teilweises Einführen und Befestigen des ersten Befestigungselements (7) in dem dritte quer verlaufenden Loch (9) des zweiten länglichen Teils (4);
- Einsetzen des freien Endes des ersten Befestigungselements (7) in das erste längs verlaufende Loch (5) des Zapfens (3) des ersten länglichen Teils (1);
- Einführen des zweiten Befestigungselements (8) in das zweite quer verlaufenden Loch (6) des ersten länglichen Teils (1);
- Zusammenwirken lassen des ersten und des zweiten Befestigungselements (7, 8), damit sie das erste und das zweite längliche Teil (1, 4) zusammenhalten;
- Verstärken des Zusammenbaus des ersten und zweiten länglichen Teils (1, 4) durch:
• Einsetzen der beiden Winkel (10) auf übereinander liegende Weise angeordnet in die beiden rechtwinklig zueinander verlaufenden Längsnuten (2);
• Betätigung des Mittels (11) zum Beabstanden, um den ersten und den zweiten Winkel (10) voneinander wegzudrücken und so die Verbindung des ersten und des zweiten länglichen Teils (1, 4) zu verstärken.

13. Verfahren nach Anspruch 12, wobei ein Kit nach einem mindestens von Anspruch 3 abhängigen Anspruch verwendet wird, das außerdem den Schritt eines teilweisen Einführens der Latte (15) in eine zusätzliche Längsnut (13, 14) umfasst.

14. Verfahren nach einem der Ansprüche 12 und 13, wobei ein Kit mindestens nach einem von Anspruch 4 abhängigen Anspruch verwendet wird, ferner umfassend den Schritt eines vollständigen Einführens des quaderförmigen Füllelements (16) in eine der Längsnuten (2) oder gegebenenfalls in eine der zusätzlichen Längsnuten (13, 14).

15. Möbelelement, montiert mithilfe mindestens eines Kits nach einem der Ansprüche 1 bis 11.

## Claims

1. Kit for mounting a piece of furniture comprising .
- at least a first elongate part (1) and a second elongate part (4) each having a longitudinal axis (X) and at least one longitudinal groove (2) parallel to this longitudinal axis (X); the two longitudinal grooves (2) having the same cross-section; the first elongate part (1) having, at a longitudinal end, a stud (3) capable of being inserted into the longitudinal groove (2) of the second elongate part (4); a first, longitudinal hole (5) being provided in the stud (3) and a second, transverse hole (6) being provided in the first elongate part (1) and opening into the first longitudinal hole (5); a third, transverse hole (9) being provided in the longitudinal groove (2) of the second elongate part (4);
- a first fastening element (7) able to partially penetrate into the first hole (5) and partially into the third hole (9); and
- a second fastening element (8) able to penetrate at least partially into the second hole (6); the first and second fastening elements (7, 8) being able to cooperate with each other to hold the first and second elongate parts (1, 4) together;
**characterised in that** it further comprises means (10, 11) for reinforcing the assembly of the first and second elongate parts (1, 4),
these reinforcement means comprising two brackets (10), able to be inserted at least partially into said two longitudinal grooves (2) by being superimposed on one another, as well as means (11) for spacing the two brackets (10) apart from one another, when they are inserted in a superimposed manner in said two longitudinal grooves (2) .

2. A kit as claimed in claim 1, wherein each longitudinal groove (2) extends along the entire length of the respective elongate part (1,4) .

3. - Kit according to claim 1 or claim 2, in which the faces of the brackets (10) intended to face the walls of the longitudinal grooves are provided with mini-picots to increase the friction between the brackets (10) and these walls.

4. Kit according to one of claims 1 to 3, in which at least one of the first and second elongate parts (1, 4) has at least one additional longitudinal groove (13, 14) and the kit further comprises at least one lath (15) whose thickness is substantially equal to the width of the additional longitudinal groove (13, 14).

5. - Kit according to claim 4, wherein the longitudinal groove(s) and the additional longitudinal groove(s) have the same dimensions.

6. Kit according to one of claims 1 to 5, further comprising at least one parallelepiped filling element (16), the cross-section of which has the same area as the cross-section of at least one of the longitudinal grooves (2) or, where appropriate, of one of the additional longitudinal grooves (13, 14).

7. Kit according to one of claims 1 to 6, in which the thickness (18) and the width of the stud (3) of the first elongated part (3) are equal.

8. Kit according to one of claims 1 to 7, in which the stud (3) of the first elongate part (1) has a width of value a and a length of value **c,** with **c** > **a,** a variable **b** being defined as **b** = (**c-a**)/2, and in which the elongate parts (1, 4) have a cross-section selected from the following .
- a cross-section corresponding to a large square whose side has a length equal to (3**a**+2**b**) and from which eight small squares of side (**a**) have been removed, four at the corners and four in the middle of the sides of the square ;
- a cross-section corresponding to a rectangle of length (3**a** + 2**b**) and width (2**a** + 2**b**) from which five squares of side (**a**) have been removed, two at the two corners of the same length, one in the middle of the same length, then two in the middle of the two remaining widths;
- a cross-section corresponding to a large square of side (2**a** + 2**b**) from which three small squares of side (**a**) have been removed, two in the middle of two adjacent sides, then at the angle formed by these two sides; and
- a cross-section corresponding to a rectangle of length (3**a** + 2**b**) from which two squares of side (**a**) have been removed, in the middle of the two widths.

9. - Kit according to claim 8, in which **c** > 2**a** and preferably **c** = 3**a**.

10. - A kit according to any one of claims 1 to 9, wherein the surface of the end of the first elongate part (1), from which each stud (3) projects, is perpendicular on all sides to the longitudinal axis of that first elongate part (1).

11. - A kit according to any of claims 1 to 10, wherein the cross-section of each elongate part (1, 4) is substantially constant over the entire axial length of that part (1, 4).

12. A method of assembling a piece of furniture comprising the steps of:
- providing a kit according to one of claims 1 to 11 ;
- partially inserting and securing the first fixing element (7) in the third transverse hole (9) of the second elongate part (4);
- inserting the free end of the first fastening element (7) into the first longitudinal hole (5) of the stud (3) of the first elongated part (1);
- inserting the second fastening element (8) into the second transverse hole (6) of the first elongated part (1);
- engage the first and second fastening elements (7, 8) so that they hold the first and second elongated parts (1, 4) together;
- reinforcing the assembly of the first and second elongate parts (1, 4) by :
• inserting the two brackets (10) one on top of the other in the two perpendicular longitudinal grooves (2);
• actuating the spacing means (11) in order to space the first and second brackets (10) apart, thereby reinforcing the assembly of the first and second elongate parts (1, 4) .

13. A method according to claim 12, wherein a kit according to at least one claim depending on claim 4 is used, further comprising the step of partially inserting the lath (15) into a further longitudinal groove (13,14).

14. A method according to one of claims 12 and 13, in which a kit according to at least one dependent claim of claim 4 is used, further comprising the step of fully inserting the parallelepiped filling element (16) into one of the longitudinal grooves (2) or, if appropriate, into one of the additional longitudinal grooves (13, 14).

15. Piece of furniture mounted using at least one kit according to one of claims 1 to 11.
